# FASCICULE DE BREVET EUROPEEN

(11) **EP 3 579 687 B1**
(45) Date de publication et mention de la délivrance du brevet: **06.03.2024**
(21) Numéro de dépôt: 18705445.7
(22) Date de dépôt: 31.01.2018
(51) Int. Cl.: A01K 1/00, A01K 1/06, A01K 15/02

(54) **LOGETTE COMPRENANT UNE STRUCTURE GUIDE POUR LA STABULATION D'ANIMAUX TELS QUE DES BOVINS**
LIEGEBOX MIT FÜHRUNGSSTRUKTUR ZUR STALLUNTERBRINGUNG VON TIEREN WIE ETWA RINDER
CUBICLE COMPRISING A GUIDE STRUCTURE FOR STALLING ANIMALS SUCH AS CATTLE

(30) Priorité: 07.02.2017 FR 1751010
(43) Date de publication de la demande: 18.12.2019
(73) Titulaire: Fournier, Nicolas, 52190 Esnoms au Val (FR)
(72) Inventeur: Fournier, Nicolas, 52190 Esnoms au Val (FR)
(74) Mandataire: Oudin, Stéphane
(86) Numéro de dépôt international: PCT/FR2018/050234
(87) Numéro de publication internationale: WO 2018/146398

(56) Documents cités:
- WO-A1-2017/037390
- DE-A1- 1 482 345
- DE-U1- 7 724 959
- FR-A1- 2 303 469
- SE-C1- 111 296
- US-B1- 7 007 632

## Description

### Domaine technique

La présente invention concerne le domaine général des exploitations agricoles et plus précisément le domaine des logettes destinées à servir d'espace de couchage pour un animal, par exemple un bovin, en stabulation libre ou entravée.

L'invention concerne plus particulièrement une logette comportant un dispositif permettant aux animaux de se lever et/ou se coucher plus facilement.

### Technique antérieure

Les logettes actuelles, très présentes dans les exploitations, comportent différents éléments bien connus de l'Homme du Métier, tels que la barre au garrot, l'arrêtoir, le séparateur de logette, ainsi que les barres frontales horizontales. Il ne faut pas confondre les fonctions et les emplois auxquels sont destinées les logettes comparativement aux cornadis qui ne sont pas visés par la présente invention.

La plupart des éléments des logettes sont disposés de façon fixe. Ils engendrent donc une gêne, voire des traumatismes chez les animaux lors de leurs déplacements.

L'arrêtoir, dont la fonction est de limiter l'avancement de l'animal en position couchée, est un élément qui provoque fréquemment des blessures (écorchures, ulcères...) au niveau des genoux et/ou des jarrets des animaux.

Dans le cas de la barre frontale ou barre au garrot, dont la fonction est de limiter l'avancement de l'animal en position debout, on repère aisément un mauvais réglage des logettes. Une perte de poils ou des enflures au niveau du cou se produisent lorsque la barre est mal réglée en hauteur, tandis qu'une boiterie et/ou une position « perchée » de l'animal surviennent lorsque la barre est réglée trop près du seuil de la logette.

Dans le cas inverse, lorsque l'animal peut se lever avec aisance, il aura tendance à se tenir plus profondément dans sa logette, ce qui signifie qu'il y défèque davantage, augmentant les risques d'infections et le temps nécessaire à l'entretien.

Enfin, la barre au garrot et l'arrêtoir sont très souvent positionnés dans le même plan vertical, ce qui n'est pas une configuration très ergonomique.

On rappellera qu'un bovin se couche et se lève en moyenne 16 fois par jour et que la durée moyenne en station couchée influe sur la productivité de l'animal (lait/viande) et sa santé (frais vétérinaires/amélioration du taux de réforme).

Enfin, l'anatomie d'un bovin est telle que son épaule se déplace d'une part selon une diagonale montante lors de la séquence du lever et d'autre part selon un axe vertical lors de la séquence du coucher. L'optimisation des éléments frontaux en fonction de cette anatomie particulière est donc un réel enjeu, afin de garantir à l'animal d'une part un guidage de ses mouvements, d'autre part une liberté accrue pour son positionnement, et enfin un espace de vie plus propre.

Certaines alternatives existent, visant le plus souvent à brider l'animal tout en laissant une liberté de mouvement limitée dans une position couchée et une position debout. A cette fin, les systèmes proposés présentent fréquemment des éléments pivotants. On connaît par exemple les structures proposées dans les documents US 3 413 959 et US 1 197 194.

Le document US 3 413 959 présente un agencement constitué de montants verticaux en forme de double U inversé, élargi au niveau des épaules de l'animal, et d'une barre transversale inférieure destinée à venir entraver l'animal une fois que celui-ci a passé sa tête sous lesdits montants, tandis que le document US 1 197 194 concerne une installation dans laquelle il est prévu d'ajuster par pivotement un élément formant un U inversé, articulé entre le sol et un élément horizontal de support.

Dans le même esprit, on connaît également le document US 2 648 308 qui décrit une barrière inclinable comportant une multiplicité d'étriers de support possédant des bras divergeant formant un V inversé et munis d'une chaîne visant à bloquer l'avancée de l'animal en partie basse, la position du sommet dudit étrier étant réglable dans la direction transverse au plan desdits bras en V.

Ces constructions restent néanmoins peu ergonomiques pour les animaux, elles ne peuvent pas être réglées en fonction de chaque animal et doivent être manipulées manuellement par l'Homme.

D'autres systèmes ont tenté de pallier ces inconvénients, en proposant des constructions pivotantes visant à éclipser complètement la partie avant de la structure lorsque l'animal est couché, et inversement à présenter la structure face à l'animal en position debout, notamment lors des périodes d'alimentation. Une telle conception est divulguée dans le document DE 20 2009 004716, où la structure mécanisée permet de brider l'animal en position debout au niveau de la tête, et est prévue pour contraindre l'animal à se coucher sous la structure lorsque celle-ci est relevée. Un autre système permettant de perturber au minimum l'animal est proposé dans le document WO 2008/103038, où une structure sous forme de genouillère pivotante, sur laquelle l'animal s'allonge, est proposée.

Il est connu des équipements tels que ceux décrits dans la demande de brevet français FR 2 303 469 ou encore le modèle d'utilité allemand DE 77 24 959.

Néanmoins, tous ces dispositifs peuvent engendrer des blessures aux animaux, localisées à la tête dans le premier cas (risque de blessures par coincement des cornes), ou localisées aux genoux et jarrets (dues aux frottements) dans le second cas.

### Exposé de l'invention

La présente invention vise ainsi à proposer une logette munie d'un ou plusieurs éléments frontaux mieux adaptés aux animaux.

Le développement d'une logette ergonomique repose sur une complète compréhension des séquences de mouvements de l'animal que l'on cherche à guider. Lorsque l'animal est installé dans sa logette, il effectue une série particulière de mouvements dans le cas du lever (ou du coucher). L'animal étire sa tête vers l'avant et vers le bas (mouvement M1) pour lever son arrière-train, puis fait un pas d'environ 45 cm en avant de l'épaule avec un premier membre antérieur sur lequel il va s'appuyer, tout en faisant un mouvement de recul (mouvement M2) à la fois vers l'arrière et vers le haut, pour enfin déplier le deuxième membre antérieur et se relever complètement selon un mouvement vertical (mouvement M3).

Ainsi, afin de ne pas gêner l'animal dans ses mouvements, la géométrie globale de l'élément frontal (ou de la structure frontale) doit suivre cette séquence de mouvements.

A cet égard, il est proposé, conformément à l'invention, une logette consistant en un « espace intérieur » I dans lequel l'animal peut évoluer, et comportant les caractéristiques de la revendication indépendante 1.

Elle est constituée par différents éléments de blocage, parmi lesquels :
- Un (ou des) élément(s) de façade haut, tel que un (ou des) élément(s) frontal(aux) ou une structure frontale, à l'avant de ladite logette,
- Préférentiellement un Un (ou des) élément de façade bas, tel que un arrêtoir au sol (encore appelé genouillère) et/ou au moins un élément anti-reptation (encore appelé arrêtoir pectoral), à l'avant de ladite logette,
- Un (ou des) élément latéral, tel que un(des) séparateur(s) de logette, sur les côtés de ladite logette.

L'élément de façade haut selon l'invention est prévu de manière à ce que les épaules de l'animal, quelle que soit sa position, ne puissent franchir un plan P₁ vertical pris comme référence symbolisant (le plan P₁ n'étant pas physique) l'avant de ladite logette (appelé également par la suite « plan avant »).

Selon l'invention, l'élément de façade haut selon l'invention est prévu de manière à ce que les épaules de l'animal, lorsqu'il est couché, ne puissent franchir ledit plan P₁ vertical.

On appelle « espace extérieur » E l'espace situé au-delà de la logette, à l'avant de l'animal. Ainsi, le plan vertical P₁ délimite l'espace intérieur I par rapport à l'espace extérieur E à l'avant de la logette.

Les termes « gauche » et « droit » correspondent à la vue depuis l'extérieur de la logette, lorsque l'on regarde l'animal de face, lorsqu'il est en position classique dans sa logette.

Ainsi, la présente invention repense le positionnement de l'animal dans sa logette non plus exclusivement relativement au paramètre « hauteur au garrot », mais relativement aux paramètres « largeur de l'animal », « hauteur à l'épaule en position couchée » et « hauteur sabot - pointe de l'épaule » (hauteur à l'épaule en position debout).

La solution proposée repose sur un agencement minimaliste, de type « collerette » (dans le cas d'une logette comprenant deux éléments frontaux), qui :
- sert de guide à l'animal lorsque celui-ci se couche ou se relève, et
- empêche l'animal de ramper vers l'avant de ladite logette (c'est-à-dire vers l'espace extérieur E, où se situe le plus souvent la nourriture), puisque ses épaules ne peuvent aller au-delà du plan avant P₁.

Ainsi, l'élément frontal, pour la stabulation d'un animal tel qu'un bovin dans une logette dont la limite avant est symbolisée par un plan vertical P₁ comprenant un axe vertical B de symétrie de ladite logette et faisant office de frontière entre un espace intérieur I et un espace extérieur E, comprend au moins un moyen de contention de l'animal :
- hors-sol,
- comprenant au moins : une bordure supérieure, une bordure intérieure apte à guider passivement les mouvements de l'animal lors du lever et du coucher,
- apte à entraver à tout moment l'avancement dudit animal vers l'espace extérieur E, en contraignant l'animal à conserver à tout moment ses épaules dans l'espace intérieur I,
et apte à recevoir la tête de l'animal au-dessus de ladite bordure supérieure dudit moyen de contention lorsque l'animal est debout. Ledit élément frontal peut comprendre au moins un moyen de réglage de ses dimensions dans le but d'être ajustable tout au long du processus de croissance de l'animal. Selon l'invention, le moyen de contention de l'animal est orienté selon un plan P₂ incliné d'un angle aigu α relativement au plan P₁ de manière à ce que le demi-plan P₂ inférieur soit dirigé vers l'espace extérieur E, l'intersection entre ledit plan P₁ et ledit plan P₂ définissant un axe horizontal A.

Avantageusement, l'élément frontal permet d'entraver à tout moment l'avancement dudit animal vers ledit espace extérieur E.

Une fois mis en place, ledit moyen de contention de l'animal est préférentiellement globalement fixe, c'est-à-dire que le référentiel géométrique minimal défini précédemment (plan P₁, plan P₂, axe A, axe B) .

Ledit moyen de contention de l'animal est également un moyen de guidage du cou de l'animal lors de ses mouvements de lever et coucher. Il peut également être considéré comme un moyen de correction de la posture et du comportement de l'animal.

L'emploi dudit moyen de contention au sein d'une logette permet de canaliser les mouvements de la tête de l'animal, et plus spécifiquement les mouvements de son cou, en l'incitant à adopter une posture et un comportement corrects dans la logette.

Il s'agit d'un guidage « passif » c'est-à-dire que le moyen de contention n'a pas à bouger ou être bougé de manière conséquente (par exemple via le basculement complet de la structure qui constitue une incitation active par le mouvement et/ou par une incitation active par un bruit ou tout autre stimuli) pour inciter l'animal à passer de la position debout à la position couchée et réciproquement. L'incitation est passive.

Néanmoins, le moyen de contention peut comprendre des moyens déformables visant à le rendre souple tels que des matériaux flexibles, des articulations, des ressorts, etc..., et donc très légèrement mobile pour faciliter son interaction avec l'animal, et/ou pour pouvoir s'adapter suite à toute sollicitation mécanique induite par l'animal, et/ou à atténuer toute sollicitation mécanique induite par l'animal, et limiter les risques de blessure. On comprend bien que de telles variantes dudit moyen de contention restent globalement dans leur position prévue dans le repère géométrique minimal défini (plan P₁, plan P₂, axe A, axe B), ou dans tout repère étendu prévu dans ce texte et incluant ledit repère minimal, même si elles subissent éventuellement de légères et fugaces déformations.

On entend par « hors-sol », le fait que l'animal peut librement passer ses membres en dessous dudit moyen de contention sans rencontrer d'obstacle et/ou le fait qu'il n'y ait pas de point d'ancrage direct entre ledit moyen de contention et le sol.

Préférentiellement, la bordure intérieure dudit moyen de contention de l'animal présente une forme adaptée à l'encolure de l'animal.

Avantageusement, ladite bordure intérieure est pleinement en regard avec le cou de l'animal exclusivement lors des mouvements de lever et coucher de celui-ci.

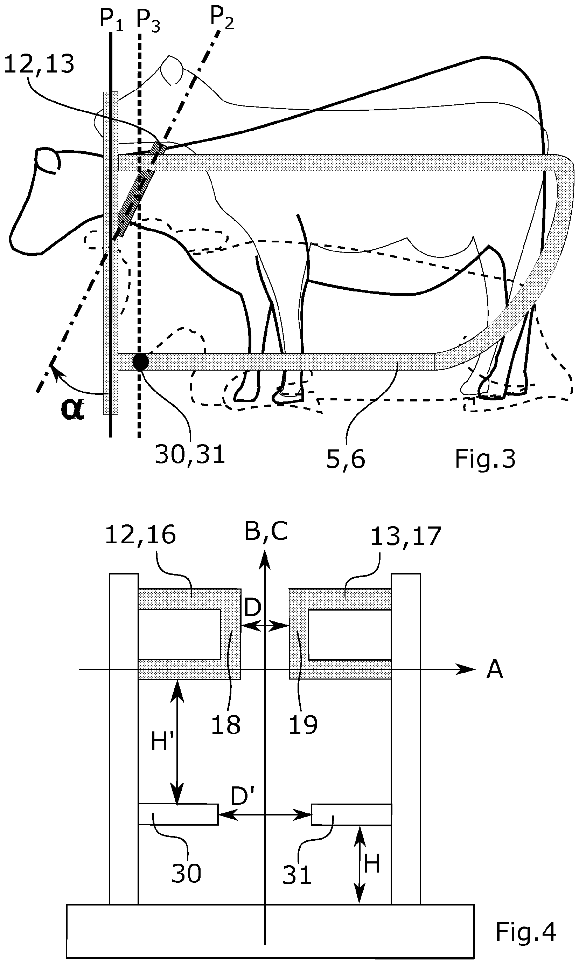

On entend par « pleinement » le fait que, lorsque l'on regarde l'animal latéralement, le diamètre de son cou apparaît plus petit que la dimension apparente de ladite bordure intérieure (cf. figure 3, animal en train de se lever et/ou coucher représenté en traits forts).

Lorsque l'animal est debout ou couché, il peut arriver que la bordure intérieure du moyen de contention soit partiellement en regard du cou de l'animal. Cette situation peut survenir avec des animaux plus grands ou plus petits que la normale (relativement à leur espèce), ce qui est un cas peu fréquent dans les troupeaux actuels.

Préférentiellement, ladite bordure supérieure et ladite une bordure intérieure sont contiguës et/ou forment une même et unique bordure.

Préférentiellement, ledit moyen de contention est globalement rectangulaire.

Avantageusement, ledit élément frontal comprend au moins un moyen d'ancrage relié audit moyen de contention, et destiné à permettre la fixation dudit élément frontal à un élément externe (encore appelé élément porteur) tel que le sol, un mur, un plafond, une chaîne de suspension, un poteau, une barre, un séparateur de logette...

Avantageusement, ledit moyen d'ancrage permet la construction rapide d'une logette.

Ledit moyen d'ancrage peut par exemple être une barre, un collier, un anneau, un piton, une aile perforée...

Selon l'invention, l'élément frontal est apte et destiné à recevoir la tête de l'animal au-dessus de ladite bordure supérieure dudit moyen de contention lorsque l'animal est debout. On comprend par-là que le positionnement par l'animal de sa tête au-dessus de ladite bordure supérieure dudit moyen de contention est récurrent et souhaité, c'est-à-dire qu'il ne s'agit pas d'un mouvement indésirable résultant d'une « erreur » de positionnement provenant de l'animal.

Avantageusement, l'animal peut positionner sa tête au moins au-dessus dudit moyen de contention, qu'il soit debout ou couché.

Néanmoins, l'angle α est préférentiellement choisi afin d'inciter l'animal à positionner sa tête à hauteur ou en-dessous dudit moyen de contention lorsqu'il est couché.

Préférentiellement, l'angle α est compris entre 50° et 75°. Encore plus préférentiellement, l'angle α vaut 60°.

Avantageusement, selon une variante préférée, l'élément frontal est tubulaire, par exemple conçu à partir de tubes métalliques ou à partir de tubes plus souples. L'Homme du Métier sait choisir le matériau adéquat en fonction de l'âge et du type d'animal à contenir.

Dans ces variantes tubulaires, l'élément frontal comprend en outre préférentiellement au moins une barre de sûreté qui permet d'éviter que l'animal ne coince sa tête dans ledit élément frontal.

Avantageusement, selon certaines variantes de l'invention, l'élément frontal comprend au moins un moyen de réglage de ses dimensions (tel qu'un système de tubes télescopiques), par exemple dans le but d'être ajustable tout au long du processus de croissance de l'animal.

Selon l'invention, on entend par « élément de liaison » un élément permettant de relier plusieurs éléments frontaux entre eux, préférentiellement par leur(s) point(s) le(s) plus haut(s), tel qu'une barre horizontale, un élément en forme de U inversé, triangulaire, arrondi, un cadre ou une chaîne.

Ainsi, un élément frontal peut être mis en oeuvre dans une structure frontale comprenant au moins deux éléments frontaux, présentant un écartement horizontal minimal D, ledit écartement étant à la fois supérieur à l'encolure et inférieur à la carrure de l'animal, lesdits éléments frontaux étant disposés selon une relation de symétrie chirale relativement à :
- un plan P₃ vertical parallèle au plan P₁ passant par le centre dudit moyen de contention, et
- à un axe vertical C appartenant simultanément au plan P₃ et au plan perpendiculaire au plan P₁ qui contient l'axe B.

Ainsi, la structure frontale peut être décrite par référence au repère géométrique minimal défini (plan P₁, plan P₂, axe A, axe B) et/ou au repère géométrique étendu défini ci-avant (plan P₁, plan P₂, plan P₃, axe A, axe B, axe C) .

Avantageusement, selon certaines variantes, les éléments frontaux mis en oeuvre dans ladite structure frontale sont associés entre eux par au moins un élément de liaison.

Avantageusement, selon certaines variantes, ladite structure frontale comprend au moins un moyen de fixation destiné à la fixer à un élément porteur.

Avantageusement, afin de rendre possible le réglage de l'écartement horizontal minimal D, l'élément de liaison comprend au moins un moyen de réglage (d'ajustement) de ses dimensions.

Avantageusement, l'écartement horizontal minimal D prendra une valeur comprise entre 20 et 30 cm. Préférentiellement, l'écartement horizontal minimal D est de 30 cm.

Avantageusement, ledit élément de liaison comprend au moins un moyen de fixation pour pouvoir être fixé à au moins un élément porteur.

En usage normal, l'animal avance dans sa logette munie d'au moins un élément frontal ou d'une structure frontale. Celle-ci a été mise en place à une hauteur telle que la tête de l'animal passe au moins au-dessus des bordures supérieures du (ou des) moyen de contention, et éventuellement sous l'élément de liaison dans les variantes où celui-ci existe. La tête de l'animal se trouve alors dans l'espace extérieur. L'écartement horizontal minimal D entre les deux éléments frontaux est tel que l'animal ne peut pas avancer plus loin qu'au niveau de ses épaules. L'animal est alors libre d'effectuer les balancements de tête et les mouvements de descente et de montée de son corps pour se lever et/ou se coucher, tout en étant guidé par l'élément frontal ou la structure, qui, selon la variante choisie pourra en outre être réglable et/ou dotée d'éléments amortisseurs.

On comprend bien que, dans sa variante minimaliste, une logette comprend au moins un élément de façade haut et au moins un élément latéral de blocage.

On peut par exemple envisager une logette délimitée par un mur qui sert d'élément latéral et par un unique élément frontal associé à un séparateur de logette de l'autre côté.

Les variantes améliorées d'une logette, quelle que soit la variante choisie pour le(s) élément(s) de façade haut(s), comprennent également au moins un élément de façade bas, qui vient compléter l'ensemble de base présenté auparavant et constitué d'au moins un élément de façade haut associé à au moins un élément latéral de blocage.

Avantageusement, l'élément de façade bas est disposé dans le plan P₁.

Préférentiellement, l'élément de façade bas est disposé sous le (ou les) moyen de contention.

Encore plus préférentiellement, l'élément de façade bas est disposé sous le (ou les) moyen de contention, dans un plan parallèle au plan P₁.

Selon une variante tout à fait préférée, l'élément de façade bas est disposé sous le (ou les) moyen de contention, dans un plan P₃ parallèle au plan P₁ passant par le centre dudit moyen de contention.

Ainsi, selon une variante de l'invention, l'élément de façade bas est un arrêtoir placé au sol.

Un tel arrêtoir peut par exemple prendre la forme d'un tuyau ou d'une planche de bois.

Selon une variante améliorée, l'élément de façade bas est un élément anti-reptation, permettant à l'animal de passer ses pattes en dessous mais pas sa tête, et faisant saillie vers l'espace intérieur de ladite logette. Dans cette configuration, le point le plus bas de la surface inférieure dudit élément anti-reptation est disposé à une hauteur H du sol. Préférentiellement, la hauteur H est comprise entre 20 et 40 cm.

Ainsi, une sous-variante particulièrement préférée de cette variante améliorée consiste en une logette comprenant au moins une paire d'éléments anti-reptation (élément(s) gauche et élément(s) droit) disposés de part et d'autre de la logette, préférentiellement symétriquement, chacun étant fixé à un élément latéral tel qu'un séparateur de logette.

Dans les variantes où les éléments anti-reptation sont disposés de part et d'autre de la logette, l'écartement horizontal D' qui sépare leurs extrémités internes respectives (extrémité dirigée vers l'intérieur de la logette) doit être adapté au gabarit de l'animal, et notamment à sa largeur de poitrail ou d'épaules. Préférentiellement, l'écartement D' est compris entre 20 et 60 cm.

Enfin, pour que l'animal puisse passer sa tête entre le(s) élément(s) de façade haut(s) et bas, un écartement vertical H' suffisant doit exister entre ceux-ci.

Avantageusement, dans le cas où le(les) élément(s) de façade bas est(sont) un(des) élément(s) anti-reptation, l'écartement vertical H' est compris entre 40 et 70 cm.

Avantageusement, l'élément anti-reptation est constitué d'une tige horizontale.

Préférentiellement, l'élément anti-reptation est apte à pivoter dans un plan vertical parallèle au plan P₁. Pour cela, il peut par exemple être constitué d'un matériau souple et/ou articulé.

Enfin, il est entendu que l'Homme du Métier sait choisir les caractéristiques les plus appropriées pour ledit élément anti-reptation, en fonction des animaux à contenir. L'élément anti-reptation peut ainsi être réglable (par exemple sous forme d'une tige télescopique), et/ou souple, et/ou amovible, et/ou doté d'éléments amortisseurs, et/ou articulé.

### Description sommaire des figures

D'autres avantages et caractéristiques ressortiront mieux de la description des éléments frontaux et de la structure frontale en référence aux dessins sur lesquels
- la figure 1 est une vue en perspective d'une variante d'une logette selon l'invention,
- les figures 2 et 3 sont respectivement une vue latérale des principaux mouvements de l'animal et une vue latérale des principales positions de l'animal relativement à une logette selon l'invention,
- la figure 4 est une vue de face d'une logette selon l'invention.

### Description détaillée de l'invention

Dans la suite du texte, dans chaque couple de référence x-y, la référence x correspond à l'élément de gauche tandis que la référence y correspond à l'élément de droite.

Le référentiel géométrique minimal est constitué par le plan vertical P₁ définissant l'avant de ladite logette 1, le plan P₂ incliné d'un angle α relativement au plan P₁ et coupant celui-ci selon un axe horizontal A, et un axe vertical B appartenant à P₁. Ledit axe B est un axe passant visuellement au milieu des deux éléments frontaux 10-11 lorsque l'on regarde l'avant de la logette 1. Eventuellement, le référentiel peut être étendu et comprendre :
- un plan P₃ vertical parallèle au plan P₁ et passant par le centre du (des) moyen de contention, et
- un axe vertical C appartenant simultanément au plan P₃ et au plan perpendiculaire au plan P₁ qui contient l'axe B.

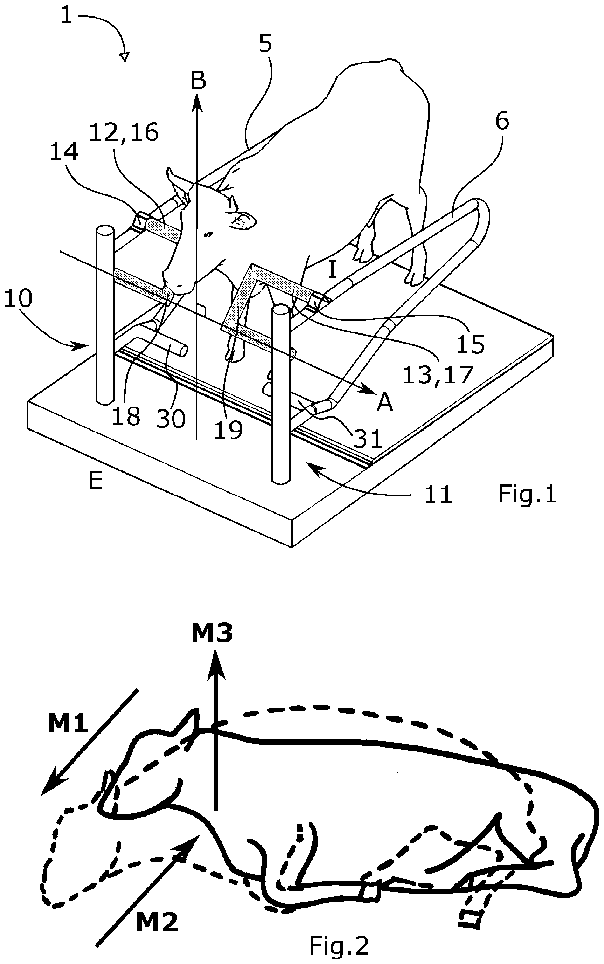

Sur chacune des figures 1 à 4, seuls les éléments du référentiel les plus adéquats à sa bonne compréhension sont représentés.

Avantageusement, comme présenté à la figure 1, une logette 1 consiste en un espace intérieur I et comprend des séparateurs de logette 5-6 et des éléments frontaux 10-11, tubulaires dans cette variante. L'espace extérieur E est situé au-delà de la logette 1, à l'avant de l'animal. Ainsi, le plan vertical P₁ délimite l'espace intérieur I par rapport à l'espace extérieur E à l'avant de la logette.

Les éléments frontaux 10-11 comprennent chacun un moyen de contention 12-13 de l'animal représenté grisé et au moins un moyen d'ancrage 14-15. Ledit moyen de contention 12-13 comprend lui-même une bordure supérieure 16-17 et une bordure interne 18-19.

La figure 2 est une vue latérale des principaux mouvements de l'animal relativement à ladite logette 1 : un animal qui souhaite se lever, conformément à la figure 2, étire sa tête vers l'avant et vers le bas selon un mouvement M1 pour lever son arrière-train, puis fait un mouvement de recul M2 à la fois vers l'arrière et vers le haut au cours duquel son cou est guidé par les bordures interne 18-19 (seul moment où les bordures intérieures 18-19 sont pleinement en regard avec le cou de l'animal), pour enfin se relever complètement selon un mouvement vertical M3.

L'animal debout (représenté en train plein fin), en train de se coucher (représenté en trait fort) et couché (représenté en pointillé) est illustré à la figure 3.

Lorsque l'animal est debout dans la logette 1, sa tête passe librement au-dessus de l'élément frontal 10-11, et plus particulièrement au-dessus de ladite bordure supérieure 16-17 dudit moyen de contention 12-13, et ses épaules viennent en butée dudit moyen de contention 12-13, préférentiellement au niveau du point le plus haut dudit moyen de contention 12-13.

Lorsque l'animal est couché dans la logette 1, sa tête peut soit être en dessous (cas représenté) ou au-dessus dudit moyen de contention 12-13, mais quelle que soit la position de sa tête, selon l'invention,

l'animal ne peut faire passer ses épaules au-delà du plan P₁ du fait du positionnement dudit moyen de contention 12-13. Par ailleurs, les éléments anti-reptation 30-31 représentés sont dans le plan P₃.

Enfin, la figure 4 est une vue de face de ladite logette 1 et d'une partie du référentiel géométrique associé. Sur cette figure, les différentes dimensions typiques de ladite logette 1 sont représentée, à savoir : écartement minimal D entre lesdits éléments frontaux 10-11, écartement horizontal D' entre les éléments anti-reptation 30-31 (l'axe C passant visuellement au milieu dudit écartement horizontal D' lorsque l'on regarde l'avant de la logette 1), hauteur H entre le sol et le point le plus bas dudit élément anti-reptation, écartement vertical H' entre élément(s) de façade haut(s) et bas.

Dans cette variante de logette 1 où ledit moyen de contention est rectangulaire (et à coins arrondis), les bordures internes 18-19 sont parallèles, et présentent un écartement minimal D constant.

Néanmoins, dans une variante non représentée, ledit moyen de contention 12-13 pourrait par exemple être triangulaire, avec un écartement D entre les bordures internes 18-19 allant en décroissant depuis le point le plus haut dudit moyen de contention vers le point le plus bas. L'écartement minimal D serait alors mesuré entre les points les plus bas desdits moyens de contention 12-13.

### Possibilité d'application industrielle

On comprend bien que l'élément frontal 10-11 et la structure frontale selon l'invention s'appliquent à la stabulation d'animaux, et plus particulièrement à des bovins, afin d'une part de limiter l'avancée de l'animal dans sa logette 1 et d'autre part de guider ses mouvements de lever et/ou coucher, sans engendrer de blessures.

Enfin, il va de soi que la présente invention ne se limite pas aux seules formes d'exécution décrites ; elle en embrasse, au contraire, toutes les variantes de réalisation et d'application respectant le même principe défini par les revendications suivantes.

## Revendications

1. Logette (1) pour la stabulation d'un animal, dont la limite avant est symbolisée par un plan vertical P₁ comprenant un axe vertical B de symétrie de ladite logette (1), ledit plan P₁ faisant office de frontière entre un espace intérieur I et un espace extérieur E, ladite logette (1) comportant au moins un élément latéral (5,6) et au moins un élément frontal (10,11) constituant un élément de façade haut, ledit élément frontal (10, 11) comprenant au moins un moyen de contention (12,13) de l'animal étant hors-sol, comprenant au moins une bordure supérieure (16,17) et une bordure intérieure (18,19) apte à guider passivement les mouvements de l'animal lors du lever et du coucher, ledit moyen de contention (12,13) étant apte à entraver à tout moment l'avancement dudit animal vers l'espace extérieur E, en contraignant l'animal à conserver à tout moment ses épaules dans l'espace intérieur I, et à recevoir la tête de l'animal au-dessus de ladite bordure supérieure (16,17) dudit moyen de contention (12,13) lorsque l'animal est debout, ladite logette (1) étant **caractérisée en ce que** ledit moyen de contention (12,13) de l'animal est prévu de manière à ce que les épaules de l'animal, lorsqu'il est couché, ne puissent franchir ledit plan P₁ vertical, et **en ce que** ledit moyen de contention (12,13) est orienté selon un plan P₂ incliné d'un angle aigu α relativement au plan P₁ de manière à ce que le demi-plan P₂ inférieur soit dirigé vers l'espace extérieur E, l'intersection entre ledit plan P₁ et ledit plan P₂ définissant un axe horizontal A.

2. Logette (1) selon la revendication précédente **caractérisée en ce que** l'élément frontal (10,11) comprend en outre au moins un moyen d'ancrage (14,15) relié audit moyen de contention, destiné à permettre la fixation dudit élément frontal (10,11) à un élément porteur.

3. Logette (1) selon l'une quelconque des revendications précédentes **caractérisée en ce que** l'élément frontal (10,11) comprend au moins un moyen déformable apte à atténuer toute sollicitation mécanique induite par l'animal.

4. Logette (1) selon l'une quelconque des revendications précédentes **caractérisée en ce que** l'élément frontal (10,11) comprend au moins un moyen d'ajustement de ses dimensions.

5. Logette (1) selon l'une quelconque des revendications précédentes **caractérisée en ce qu'**elle comprend :
• au moins deux éléments frontaux (10,11) formant une structure frontale, disposés selon une relation de symétrie chirale relativement :
o au plan P₃ parallèle au plan P₁ et passant par les centres desdits moyens de contention (12,13), et
o à un axe vertical C appartenant au plan P₃ et appartenant au plan perpendiculaire au plan P₁ contenant l'axe B,
et associés entre eux par au moins un élément de liaison,
• au moins un moyen d'ancrage (14,15) pour fixer ladite structure frontale à un élément porteur, lesdits éléments frontaux (10,11) présentant entre eux un écartement horizontal minimal D à la fois supérieur à l'encolure et inférieur à la carrure de l'animal

6. Logette (1) selon l'une quelconque des revendications précédentes **caractérisée en ce qu'**elle comprend au moins un élément de façade bas.

7. Logette (1) selon les revendications 5 et 6 **caractérisée en ce qu'**elle comprend au moins un élément anti-reptation (30, 31) en tant qu'élément de façade bas, disposé dans le plan P₃, et faisant saillie vers l'espace intérieur I de ladite logette (1).

8. Logette (1) selon la revendication précédente **caractérisée en ce qu'**elle comprend au moins une paire d'éléments anti-reptation (30, 31) disposés symétriquement de part et d'autre de ladite logette (1), les extrémités internes respectives desdits éléments anti-reptation (30,31) étant séparées d'un écartement horizontal D' compris entre 20 et 60 cm, et chaque élément anti-reptation (30, 31) étant :
• fixé à l'élément latéral qui peut être un séparateur de logette (5,6), et
• disposé à une hauteur H du sol comprise entre 20 et 40 cm,
• présentant un écartement vertical H' compris entre 40 et 70 cm avec l'élément de façade haut disposé au-dessus de lui.

## Patentansprüche

1. Liegebox (1) für die Stallhaltung eines Tieres, dessen vordere Begrenzung symbolisch durch eine vertikale Ebene P₁ dargestellt wird, die eine vertikale Symmetrieachse B der Liegebox (1, wobei die Ebene P₁ als Begrenzung zwischen einem Innenraum I und einem Außenraum E fungiert, wobei die Liegebox (1) mindestens ein Seitenelemente (5, 6) und mindestens ein Frontelement (10, 11) aufweist, die ein hohes Fassadenelement bilden, wobei das Frontelement (10, 11) mindestens ein Mittel zum Zurückhalten (12, 13) des Tieres vom Boden weg umfasst, das mindestens einen oberen Rand (16, 17) und einen inneren Rand (18, 19) umfasst, die dazu ausgelegt sind, die Bewegungen des Tieres beim Aufstehen und Hinlegen passiv zu führen, wobei das Rückhaltemittel (12, 13) dazu ausgelegt ist, jederzeit die Vorwärtsbewegung des Tieres in Richtung des Außenraums E zu verhindern, indem sie das Tier zwingt, seine Schultern jederzeit im Innenraum I zu halten, und um den Kopf des Tieres oberhalb des oberen Rands (16, 17) des Rückhaltemittels (12, 13) aufzunehmen, wenn das Tier steht, wobei die Liegebox (1) **dadurch gekennzeichnet ist, dass** das Rückhaltemittel (12, 13) des Tieres derart vorgesehen ist, dass die Schultern des Tieres, wenn es liegt, die vertikale Ebene P₁ nicht passieren können, und dadurch, dass das Rückhaltemittel (12, 13) entlang einer Ebene P₂ ausgerichtet ist, die in einem spitzen Winkel α im Verhältnis zur Ebene P₁ geneigt ist, so dass die untere Halbebene P₂ zum Außenraum E gerichtet ist, wobei der Schnittpunkt zwischen der Ebene P₁ und der Ebene P₂ eine horizontale Achse A definiert.

2. Liegebox (1) nach dem vorhergehenden Anspruch, **dadurch gekennzeichnet, dass** das Frontelement (10, 11) ferner mindestens ein Verankerungsmittel (14, 15) umfasst, das mit dem Rückhaltemittel verbunden und dazu bestimmt ist, die Befestigung des Frontelements (10, 11) an einem Elementträger zu ermöglichen.

3. Liegebox (1) nach einem der vorhergehenden Ansprüche, **dadurch gekennzeichnet, dass** das Frontelement (10, 11) mindestens ein verformbares Mittel umfasst, das dazu ausgelegt ist, jede mechanische Beanspruchung, die durch das Tier verursacht wird, zu dämpfen.

4. Liegebox (1) nach einem der vorhergehenden Ansprüche, **dadurch gekennzeichnet, dass** das Frontelement (10, 11) mindestens ein Justierungsmittel für seine Abmessungen umfasst.

5. Liegebox (1) nach einem der vorhergehenden Ansprüche, **dadurch gekennzeichnet, dass** sie Folgendes umfasst:
• mindestens zwei Frontelemente (10, 11), die eine Frontstruktur bilden und in einer chiralen Symmetriebeziehung im Verhältnis zu
o der Ebene P₃, die parallel zur Ebene P₁ ist und durch die Zentren der Rückhaltemittel (12, 13) verläuft, und
o einer vertikalen Achse C, die zur Ebene P₃ gehört und zu der zur Ebene P₁ senkrechten Ebene gehört, die die Achse B enthält,
angeordnet und durch mindestens ein Verbindungselement miteinander verbunden sind,
• mindestens ein Verankerungsmittel (14, 15) zum Befestigen der Frontstruktur an einem Trägerelement,
wobei die Frontelemente (10, 11) einen minimalen horizontalen Abstand D zwischen sich aufweisen, der zugleich größer als der Halsumfang und kleiner als der Körperbau des Tieres ist.

6. Liegebox (1) nach einem der vorhergehenden Ansprüche, **dadurch gekennzeichnet, dass** sie mindestens ein niedriges Fassadenelement umfasst.

7. Liegebox (1) nach den Ansprüchen 5 und 6, **dadurch gekennzeichnet, dass** sie mindestens ein Unterkriechschutzelement (30, 31) als niedriges Fassadenelement umfasst, das in der Ebene P₃ angeordnet ist und in Richtung des Innenraums I der Liegebox (1) vorsteht.

8. Liegebox (1) nach dem vorhergehenden Anspruch, **dadurch gekennzeichnet, dass** sie mindestens ein Paar von Unterkriechschutzelementen (30, 31) umfasst, die symmetrisch auf beiden Seiten der Liegebox (1) angeordnet sind, wobei die jeweiligen inneren Enden der Unterkriechschutzelemente (30, 31) durch einen horizontalen Abstand D' zwischen 20 und 60 cm voneinander getrennt sind und jedes Unterkriechschutzelement (30, 31):
• an dem Seitenelement befestigt ist, das eine Trennwand (5, 6) der Liegebox sein kann, und
• in einer Höhe H vom Boden zwischen 20 und 40 cm angeordnet ist,
• einen vertikalen Abstand H` zwischen 40 und 70 cm aufweist, wobei das obere Fassadenelement über ihm angeordnet ist.

## Claims

1. Stall (1) for stalling an animal, the front limit of which is represented symbolically by a vertical plane P₁ comprising a vertical axis B of symmetry of said stall (1), said plane P₁ serving as a boundary between an internal space I and an external space E, said stall (1) including at least one side element (5, 6) and at least one front element (10, 11) constituting a top façade element, said front element (10, 11) comprising at least one means (12, 13) for restraining the animal being off the ground, comprising at least a top rim (16, 17) and an inner rim (18, 19) able to passively guide the movements of the animal when getting up or lying down, said restraining means (12, 13) being able to hinder at any time the forward movement of said animal towards the external space E, by forcing the animal at all times to keep its shoulders in the internal space I, and to receive the head of the animal above said top rim (16, 17) of said restraining means (12, 13) when the animal is standing, said stall (1) being **characterised in that** said means (12, 13) for restraining the animal is designed so that the shoulders of the animal, when it is lying down, cannot pass said vertical plane P₁ and **in that** said restraining means (12, 13) is oriented along a plane P₂ inclined by an acute angle α in relation to the plane P₁ so that the bottom half-plane P₂ is directed towards the external space E, the intersection between said plane P₁ and said plane P₂ defining a horizontal axis A.

2. Stall (1) according to the preceding claim, **characterised in that** the front element (10, 11) further comprises at least one anchoring means (14, 15) connected to said restraining means, intended to allow the fixing of said front element (10, 11) to a carrying element).

3. Stall (1) according to either of the preceding claims, **characterised in that** the front element (10, 11) comprises at least one deformable means able to attenuate any mechanical force caused by the animal.

4. Stall (1) according to any one of the preceding claims, **characterised in that** the front element (10, 11) comprises at least one means for adjusting the dimensions thereof.

5. Stall (1) according to any one of the preceding claims, **characterised in that** it comprises:
• at least two front elements (10, 11) forming a front structure, disposed in a relationship of chiral symmetry in relation to:
• the plane P₃ parallel to the plane P₁ and passing through the centres of said restraining means (12, 13), and
• a vertical axis C belonging to the plane P₃ and belonging to the plane perpendicular to the plane P₁ containing the axis B,
and associated with each other by at least one connecting element,
• at least one anchoring means (14, 15) for fixing said front structure to a carrying element,
said front elements (10, 11) having between them a minimum horizontal separation D both greater than the neck measurement and less than the breadth of the animal.

6. Stall (1) according to any one of the preceding claims, **characterised in that** it comprises at least one bottom façade element.

7. Stall (1) according to claims 5 and 6, **characterised in that** it comprises at least one anti-crawl element (30, 31) as the bottom façade element, disposed in the plane P₃ and projecting towards the internal space I of said stall (1).

8. Stall (1) according to the preceding claim, **characterised in that** it comprises at least one pair of anti-crawl elements (30, 31) disposed symmetrically on either side of said stall (1), the respective inner ends of said anti-crawl elements (30, 31) being separated by a horizontal separation D' between 20 cm and 60 cm, and each anti-crawl element (30, 31) being:
• fixed to the side element, which may be a stall separator (5, 6), and
• disposed at a height H from the ground between 20 cm and 40 cm,
• having a vertical separation H' of between 40 cm and 70 cm with the top façade element disposed above it.
